# EUROPÄISCHE PATENTANMELDUNG

(11) **EP 2 207 116 A1**
(43) Veröffentlichungstag der Anmeldung: **14.07.2010**
(21) Anmeldenummer: 09150313.6
(22) Anmeldetag: 09.01.2009
(51) Int. Cl.: G06F 17/30

(54) **Bewertungssystem, Verfahren zur Bewertung einer Vielzahl von Objekten**

(71) Anmelder: multiBO GmbH, 80333 München (DE)
(72) Erfinder: Bscheid, Klaus, 82229 Seefeld-Hechendorf (DE); Städtler, Helge, 80797 München (DE); Tauschl, Gerhard, 83734 Hausham (DE)
(74) Vertreter: Rupprecht, Kay

(57) **Zusammenfassung**

Im Internet ist Information fast immer lediglich auf den Informationsinhalt reduziert. Woher die Information kommt, ob Quellen verlässlich sind und wer diese Quellen sind, bleibt anonym. Die im Internet bereitgestellten Informationen sind daher leicht zu manipulieren. Des Weiteren ist die Verbindung von grafischen Informationen (beispielsweise der Standort eines Geschäftes) häufig aufwändig. Die vorliegende Erfindung stellt sich die Aufgabe, ein verbessertes Bewertungssystem für Objekte bereit zu stellen. Dieses Bewertungssystem soll eine effiziente Abfrage der Informationen gewährleisten und sicherstellen, dass die Informationen qualitativ hochwertig sind. Diese Aufgabe wird durch ein Bewertungssystem gelöst, wobei das Bewertungssystem umfasst:
- eine Zentraleinheit;
- eine Vielzahl von Mobileinheiten, die einem Individuum zugeordnet sind, mit:
- einer Nutzinformationserfassungseinheit zur Erfassung mindesten einer Nutzinformation des Individuums;
- einer Präsenzinformationserfassungseinheit zur Erfassung mindestens einer Präsenzinformation des Individuums;
- einer Kommunikationseinheit zum Übertragen einer Bewertungsinformation, umfassend die Präsenzinformation und die Nutzinformation, an die Zentraleinheit,

wobei die Zentraleinheit eine Verarbeitungseinrichtung zur Erzeugung eines Bewertungsindexes von Objekten, insbesondere Orten und/oder Einrichtungen und/oder Veranstaltungen, in Abhängigkeit von einer Vielzahl von Bewertungsinformationen von der Vielzahl von Mobileinheiten umfasst.

Das Bewertungssystem hat den Vorteil, dass jede Nutzinformation (z.B. gut, schlecht, schnell, langsam) jeweils mit einer Präsenzinformation verknüpft ist. Daher ist es sehr aufwändig, falsche Nutzinformationen in das Bewertungssystem einzubringen. Dieser Authentifizierungsmechanismus stellt die Qualität des Bewertungssystems sicher.

## Beschreibung

Die Erfindung betrifft ein Bewertungssystem sowie ein Verfahren zur Bewertung einer Vielzahl von Objekten.

Das Internet ist ein weltweites Netzwerk bestehend aus vielen Rechnernetzwerken, durch das Daten ausgetauscht werden. Das Internet dient als vielschichtige Informationsplattform. Die dort bereitgestellten Dienste und Informationen beziehen sich nicht nur auf virtuelle Objekte, sondern beschreiben häufig reale Gegebenheiten. Es sind Suchmaschinen bekannt, die es ermöglichen sollen, gewünschte Informationen über die reale oder virtuelle Welt abzufragen. Die Qualität der erlangten Informationen ist insbesondere hinsichtlich der Abbildung von realen Tatsachen sehr fragwürdig.

Versucht man etwa, über bestehende Suchmaschinen Fragen des alltäglichen Lebens zu beantworten, so scheitert dieser Versuch meistens. Beispielsweise findet man auf die folgenden Fragen nur unzulängliche oder überhaupt keine Antworten: "Wo ist der nächste, wirklich zuverlässige Elektriker im Umkreis von zwei Kilometern?", "Welche Angebote hat mein Metzger um die Ecke derzeit?", "Welcher Bäcker in unserem Ort backt das beste Dinkelbrot?"

Das Problem der derzeitigen Suchmaschinen besteht nicht darin, dass die verwendeten Algorithmen nicht ausreichen würden, um derartige Fragestellungen abzubilden, sondern dass es äußerst schwierig ist, die reale Welt mit virtuellen Daten zu erfassen. Eine qualitative Beurteilung von Objekten, beispielsweise Orten, Dienstleistungen, Geschäften, ist schwierig zu erlangen. Des Weiteren lassen sich diese Informationen leicht manipulieren.

Die beste Referenz ist immer noch die persönliche Empfehlung von Bekannten oder Freunden, die zufällig über die benötigte Information verfügen.

Diese Referenzen haben den wesentlichen Vorteil, dass sie glaubwürdig und kompetent sind, da die Referenzgeber bereits Erfahrungen mit dem Objekt gemacht haben. Sucht man im Internet nach entsprechenden Informationen, so wird man von kommerziell gesteuerten Suchtreffern überflutet, die von Suchmaschinenanbietern gegen Entgelt so platziert wurden, dass sie besonders positiv oder sinnvoll erscheinen. Eine verlässliche Information bieten diese Suchtreffer jedoch nicht.

Es ist daher Aufgabe der vorliegenden Erfindung, ein Bewertungssystem bereit zu stellen, das es ermöglicht, reale Gegebenheiten virtuell abzubilden. Insbesondere soll ein Bewertungssystem geschaffen werden, das es ermöglicht, die Qualität von Objekten effizient technisch erfassbar zu machen. Das Bewertungssystem sollte die Informationen automatisch sammeln und deren Authentizität prüfen und gewährleisten. Des Weiteren soll ein Verfahren zur Bewertung einer Vielzahl von Objekten angegeben werden.

Diese Aufgabe wird erfindungsgemäß durch eine Vorrichtung nach Anspruch 1 bzw. durch ein Verfahren nach Anspruch 9 gelöst.

Insbesondere wird die Aufgabe durch ein Bewertungssystem gelöst, das umfasst:
- eine Zentraleinheit;
- eine Vielzahl von Mobileinheiten, die jeweils mindestens einem Individuum zugeordnet sind, mit:
   - einer Nutzinformationserfassungseinheit zur Erfassung mindesten einer Nutzinformation des Individuums;
   - einer Präsenzinformationserfassungseinheit zur Erfassung mindestens einer Präsenzinformation des Individuums;
   - einer Kommunikationseinheit zum Übertragen einer Bewertungsinformation, umfassend die Präsenzinformation und die Nutzinformation, an die Zentraleinheit,
wobei die Zentraleinheit eine Verarbeitungseinrichtung zur Erzeugung eines Bewertungsindexes von Objekten, insbesondere Orten und/oder Einrichtungen und/oder Veranstaltungen, in Abhängigkeit von einer Vielzahl von Bewertungsinformationen von der Vielzahl von Mobileinheiten umfasst.

Ein wesentlicher Punkt der Erfindung besteht also darin, dass Nutzinformationen, d.h. Informationen von Benutzern bzw. von Individuen in Verbindung mit Präsenzinformationen verarbeitet werden. Das heißt, jede Nutzinformation wird stets mit einer Präsenzinformation verknüpft, die einen tatsächlichen Bezug zur Realität hat. Solche Präsenzinformationen können beispielsweise Daten sein, die belegen, dass ein bestimmtes Individuum an einem bestimmten Ort gewesen ist. Somit ist die Authentizität der Nutzinformation zumindest dadurch belegt, dass eine tatsächliche, faktisch nachprüfbare Komponente verwendet wird. Die so entstandene Bewertungsinformation kann von der Zentraleinheit verarbeitet werden und zur Erzeugung eines authentischen Bewertungsindexes dienen. Somit können Objekten Eigenschaften, die sich beispielsweise aus den Nutzinformationen ergeben, zugeordnet werden, die sich nicht beliebig manipulieren lassen. Nutzinformationen können beispielsweise Schlagworte sein, die Eigenschaften des Objekts angeben (z.B. gut, schlecht, schnell, langweilig, teuer). Des Weiteren kann das Objekt anhand der Nutzinformationen kategorisiert werden (z.B. Bäcker, Sportcenter, Bahnhof). Eine Nutzinformation kann jedoch auch bereits darin bestehen, dass sich ein Individuum oder ein Benutzer dazu entscheidet, seine aktuelle Präsenzinformation zu erfassen, um beispielsweise anzugeben, dass es sich bei dem dadurch gekennzeichneten Objekt (z.B. Ort) um ein besonders gutes Objekt handelt. In der Realität basieren wertvolle Informationen häufig darauf, dass sie bestimmten Informationsquellen zumindest geografisch, häufig auch zeitlich genau zugeordnet werden können. Dies nutzt das vorliegende Bewertungssystem. Niemand kann etwas bewerten, wenn er nicht am Ort des Geschehens gewesen ist. Somit weist das Individuum oder der Benutzer durch die Präsenzinformation die Qualität seiner Nutzinformation nach.

Auch hat das vorliegende Bewertungssystem den Vorteil, dass Informationen allgemein und Präsenzinformationen (beispielsweise geografische Koordinaten) einfach zu erfassen sind. Die Mobileinheiten sind hierfür speziell ausgeführt. Bei diesen kann es sich beispielsweise um mobile Geräte, insbesondere um Mobiltelefone, PDAs, Notebooks, Pocket-PCs oder Smartphones handeln. Die Mobileinheiten sind dazu geeignet, tragbar von dem Benutzer mit sich geführt zu werden. Es handelt sich also um portable Geräte.

Eine Bewertungsinformation im Sinne der Anmeldung kann ein Tupel mit einer Vielzahl von Datenfeldern sein, die sich auf eine abgegebene Bewertung beziehen.

Vorzugsweise umfasst die Kommunikationseinheit eine Einrichtung zur Übertragung von elektronischen Kurznachrichten und/oder eine Funk-Sende-Empfangseinrichtung. Theoretisch ist es möglich, Nutzinformation und Präsenzinformation zu einem beliebigen Zeitpunkt zu erfassen und später an die Zentraleinheit kabelgebunden oder kabellos zu übertragen. Vorzugsweise werden jedoch Kommunikationseinheiten verwendet, die es ermöglichen, eine Übertragung zum Erfassungszeitpunkt zu gewährleisten. Somit können je nach der verwendeten Kommunikationseinheit auch anhand der Art und Weise, wie eine gewisse Bewertungsinformation übertragen wird, Rückschlüsse auf deren Authentizität geschlossen werden. Es ist besonders vorteilhaft, wenn man hierbei auf vorhandene Kommunikationsstrukturen zurückgreifen kann. So bietet sich beispielsweise der GSM-Standard an, um entsprechende Informationen zu übermitteln. So kann beispielsweise eine elektronische Kurznachricht oder SMS verwendet werden, um die Bewertungsinformation an die Zentraleinheit zu übertragen.

Die Präsenzinformationserfassungseinheit kann eine Einrichtung zum Erfassen einer geografischen Position, insbesondere eine Empfangseinrichtung für GPS- und/oder Galileo-Signale umfassen. Somit können genaue geografische Koordinaten eines Individuums erfasst und mit einer entsprechenden Nutzinformation verknüpft werden.

Alternativ oder zusätzlich kann die Präsenzinformationserfassungseinheit eine Vielzahl von digitalen Bildsensoren, z.B. in Form einer Kamera zum Erfassen einer Kennzeichnung eines Objekts aufweisen. Somit kann ein visueller Beweis für die Authentizität der Nutzinformation erbracht werden. Beispielsweise kann ein Foto eines Bäckerladens dazu dienen zu belegen, dass die hierzu angegebenen Nutzinformationen (z.B. gut) authentisch sind.

Vorzugsweise umfasst die Kennzeichnung eine optoelektronisch und/oder digital lesbare Schrift, insbesondere einen eindimensionalen und/oder zweidimensionalen und/oder dreidimensionalen Code. Allgemein ist es denkbar, eine Präsenzinformation auf einem digitalen oder analogen Speichermedium zu hinterlegen und mit einem bestimmten Objekt zu verknüpfen. Das heißt, beispielsweise kann der digitale Speicher an der Eingangstür des Bäckers angebracht werden, wobei die Zentraleinheit die darauf codierten Informationen dem zugehörigen Objekt zuordnen kann. Bei einem Besuch des Bäckerladens kann diese Präsenzinformation eingelesen oder erfasst und an die Zentraleinheit übermittelt werden. Somit kann die Präsenzinformation auf einfache Weise generiert werden. Die digital gespeicherte Information dient hierbei als Beweismittel. Vorzugsweise handelt es sich bei der Kennzeichnung um einen Code, der optoelektronisch lesbar ist. Besonders bevorzugt sind 2-D-Barcodes (zweidimensionale Barcodes) oder zweidimensionale Strichcodes, die durch zahlreiche Standards abgedeckt sind. Ein optoelektrischer Sensor an oder in der Mobileinheit kann einen entsprechenden Code einfach und schnell erfassen. Alternativ können RFID-Tags, ZIGBEE-Chips, Fingerabdrücke, Magnetstreifen und vieles mehr verwendet werden, um die Präsenzinformation an einem bestimmten geografischen Ort bereit zu stellen. Allgemein lassen sich digitale Daten leichter von der Zentraleinheit verarbeiten und auf ihre Authentizität prüfen.

Erfindungsgemäß kann mindestens eine Mobileinheit und/oder die Zentraleinheit eine Zeiterfassungseinheit umfassen. Diese kann dazu dienen, eine bestimmte Präsenzinformation und/oder Nutzinformation mit einem Zeitstempel zu versehen. Somit wird eine Nutzinformation nicht nur hinsichtlich des Ortes, sondern auch hinsichtlich des Zeitraums authentisch. Eine Präsenzinformation kann sich aber aus einem Zeitpunkt oder Zeitraum, eine Ortsinformation und/oder eine Identitätsinformation zusammensetzen. Eine Manipulation des Bewertungsindexes kann dadurch vermieden werden, dass die zeitliche Komponente berücksichtigt wird. So ist es beispielsweise äußerst unwahrscheinlich, dass dasselbe Individuum an zwei geografisch weit voneinander entfernten Orten zum gleichen Zeitpunkt eine gewisse Nutzinformation bereitstellt. Des Weiteren ist es äußerst unwahrscheinlich, dass der Laden eines Bäckers nachts um halb Zwei geprüft und beurteilt wird.

Mindestens eine Mobileinheit kann eine Identitätserfassungseinheit zur Erfassung der Identität des Individuums und/oder der Mobileinheit umfassen. Es ist sehr hilfreich, wenn eine Nutzinformation einem bestimmten Individuum oder einem bestimmten Gerät zugeordnet werden kann. Zum einen können so missbräuchliche Verwendungen des Bewertungssystems vermieden werden. Zum anderen kann die Qualität einer Nutzinformation anhand des sie erstellenden Individuums beurteilt werden.

Die Identitätserfassungseinheit kann zur Erfassung einer Identifikationsnummer, insbesondere einer IMSI- und/oder IMEI-Nummer der Mobileinheit, ausgebildet sein.

Des Weiteren wird die oben aufgeführte Aufgabe durch ein Verfahren zur Bewertung einer Vielzahl von Objekten, insbesondere mittels eines Bewertungssystems, wie bereits beschrieben, gelöst, wobei das Verfahren die folgenden Schritte umfasst:
a) Erfassen einer Vielzahl von Bewertungsinformationen mit jeweils mindestens einer Präsenszinformation, der eine geographischen Position zugeordnet werden kann;
b) Speichern der Bewertungsinformationen in einer Datenbank;
c) Zusammenfassen der Bewertungsinformationen in Bewertungsklustern, wobei die Bewertungsinformationen mit ähnlichen oder identischen geographischen Position in einem Bewertungskluster zusammengefasst werden;
d) Zuordnen mindestens eines Objekts zu einem Bewertungskluster;
e) Bewerten des mindestens einen Objekts in Abhängigkeit von den Bewertungsinformationen in dem zugeordneten Bewertungskluster.

Ein Kluster kann hier eine Menge von Datensätzen sein, die jeweils eine Bewertungsinformation mit mindestens einer Präsenzinformation umfasst. Aufgrund der Präsenzinformation (z.B. einer geografischen Koordinate) ergeben sich Bewertungskluster, die sich im Wesentlichen auf denselben geografischen Ort beziehen. Diese Bewertungskluster können verwendet werden, um Objekte, die diesem Ort zugeordnet sind, zu beurteilen. Beispielsweise kann ein entsprechender Bewertungsindex aufgebaut werden. Das hier beschriebene Verfahren verknüpft Information mit geografischen Gegebenheiten. Durch das wiederholte Bereitstellen von Bewertungsinformation, insbesondere durch Mobileinheiten, werden die einzelnen Objekte dynamisch beurteilt.

Vorzugsweise wird ein Objekt besser bewertet, wenn diesem ein Bewertungskluster zugeordnet ist, der eine größere Anzahl von Bewertungsinformationen umfasst. Das heißt, je häufiger zu einem bestimmten Objekt, insbesondere positive, Bewertungsinformationen abgegeben werden, umso besser wird dieses bewertet. Im Endeffekt bedeutet dies, dass ein häufig besuchtes Objekt wesentlich besser beurteilt wird, als eines, das selten aufgesucht wird.

Mindestens eine Bewertungsinformation kann Daten bezüglich einer Kennzeichnung eines Objekts und/oder Daten bezüglich einer von einer Mobileinheit umfassten Geokoordinate umfassen.

Die Kennzeichnung des Objekts kann ein digitaler Speicher oder eine optoelektronisch lesbare Schrift, insbesondere ein 1-D-Code (eindimensionaler Code) und/oder 2-D-Code (zweidimensionaler Code) und/oder 3-D-Code (dreidimensionaler Code) sein. Bei 2-D-Codes kann der Code bzw. die zu kodierende Information in zwei Achsen aufgetragen werden. Die 2-D-Codes können aus gestapelten 1-D-Codes bestehen (stacked), in Zeilen angeordnet sein oder als echter Flächencode (regelmäßige Matrix oder Matrix mit versetzten Zeilen aus Punktmustern) hergestellt werden. Bei 3-D-Codes stellt beispielsweise der Farbton, die Farbsättigung oder die Farbhelligkeit die dritte Dimension dar.

Die Bewertungsinformationen können Nutzinformationen, insbesondere wie bereits beschrieben, umfassen, wobei das Bewerten und/oder Zuordnen des Objekts in Abhängigkeit von den Nutzinformationen geschieht. Die Nutzinformationen können also dazu dienen, die Qualität oder eine bestimmte Eigenschaft, die einem bestimmten Objekt zugeordnet ist, zu bestimmen. Des Weiteren können die Nutzinformationen die Zuordnung eines bestimmten Objekts zu einem Bewertungskluster ermöglichen.

Die Nutzinformationen können Schlagwörter bezüglich der Güte eines Objekts umfassen, wobei in dem oben beschriebenen Schritt e) Schlagwortkluster zur Bewertung des Objekts gebildet werden. Somit können die durch die Präsenzinformation authentifizierten Nutzinformationen ein wesentliches Maß für die Beurteilung einzelner Objekte sein.

Das Verfahren kann des Weiteren den Schritt des Authentifizierens der Bewertungsinformation anhand einer Identifikationsinformation umfassen, die sich auf ein zur Erfassung der Präsenzinformation verwendetes Gerät bezieht, und/oder anhand eines Zeitstempels. Es ergibt sich also eine Authentizität der Benutzerinformation anhand von Raum und/oder Zeit, die durch die Identifikation des verwendeten Geräts oder des das Gerät verwendenden Benutzers ergänzt wird.

Nachfolgend wird die Erfindung anhand von einigen Ausführungsbeispielen beschrieben, die mittels Abbildungen näher erläutert werden. Hierbei zeigen:
- Fig. 1: ein Bewertungssystem in kommunikativer Verbindung mit einer Vielzahl von Mobileinheiten;
- Fig. 2: den schematischen Aufbau einer ersten Mobileinheit;
- Fig. 3: den schematischen Aufbau einer zweiten Mobileinheit; und
- Fig. 4: schematische Inhalte einer erfindungsgemäßen Datenbankstruktur.

In der nachfolgenden Beschreibung werden für gleiche und gleich wirkende Teile dieselben Bezugsziffern verwendet.

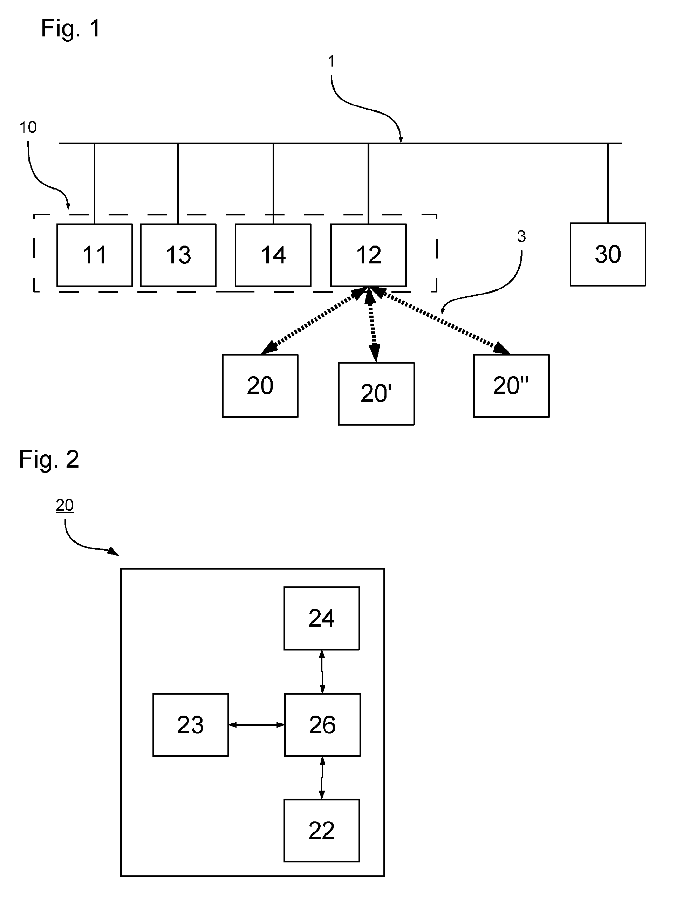

Fig. 1 zeigt die wesentlichen Komponenten eines erfindungsgemäßen Bewertungssystems. Diese umfassen eine Zentraleinheit 10, ein oder mehrere Verbrauchereinheiten 30 und eine Vielzahl von Mobileinheiten 20, 20'. Die Zentraleinheit 10 dient dazu, Informationen zu sammeln, diese auszuwerten und auf Anfrage Nutzern bereit zu stellen. Ein Nutzer der Zentraleinheit 10 kann beispielsweise über die Verbrauchereinheit 30 (z.B. einen PC) auf die Zentraleinheit 10 zugreifen. Der Benutzer ist beispielsweise auf der Suche nach einem guten Bäcker, der sich geografisch in seiner unmittelbaren Nähe befindet. Um diese Informationen entsprechend aufbereitet für den Benutzer bereitstellen zu können, kann die Zentraleinheit 10 ein Webinterface umfassen. Dieses kann auch entsprechende Suchanfragen entgegen nehmen. Für eine Kommunikation zwischen der Verbrauchereinheit 30 und der Zentraleinheit 10 ist ein Netzwerk 1 vorgesehen. Dies kann beispielsweise das Internet sein.

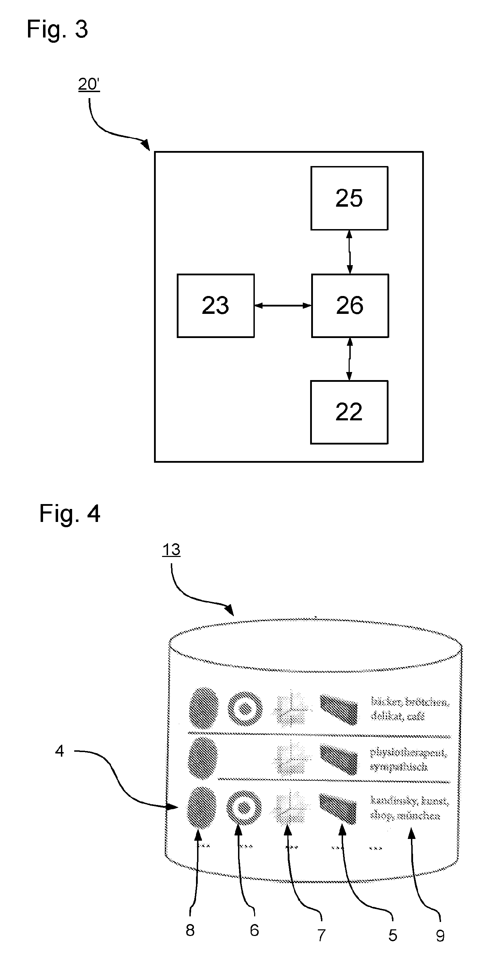

Im vorliegenden Ausführungsbeispiel kommunizieren die Mobileinheiten 20, 20' unmittelbar über eine Funkverbindung 3 mit einer Serverkommunikationseinheit 12, die ein Teil der Zentraleinheit 10 ist. Alternativ können die Mobileinheit 20, 20' drahtgebunden oder drahtlos an das Netzwerk 1 angeschlossen sein. Die Mobileinheiten 20, 20' dienen zum Sammeln von Informationen, die in einer Datenbank 13 gespeichert werden. Diese Informationen können eine 2-D-Matrix 6 oder einen Geocode, Geokoordinaten 7, Identifikationsnummern 8 und Nutzinformationen 9 (vgl. Fig. 4) umfassen.

In einem Ausführungsbeispiel dienen die Mobileinheit 20, 20' dazu, geeignete Informationen für die Zentraleinheit 10 bereit zu stellen. Sie können des Weiteren die Rolle einer Verbrauchereinheit 30 übernehmen und entsprechende Informationen von der Zentraleinheit 10, wie bereits beschrieben, abfragen.

Eine erfindungsgemäße Zentraleinheit 10 umfasst mindestens einen Server 11 mit einer Recheneinheit, der entsprechende Anfragen entgegennimmt. Des Weiteren gibt es die Datenbank 13 und die Serverkommunikationseinheit 12, die jeweils über das Netzwerk 1 mit dem Server 11 in kommunikativer Verbindung stehen. Alternativ können der Server 11, die Serverkommunikationseinheit 12 und die Datenbank 13 über einen internen Bus oder jedes andere beliebige Kommunikationsmittel miteinander verbunden sein. Optional kann die Zentraleinheit 10 einen Zeitserver 14 umfassen, der auf Anfrage einen Zeitstempel ausgibt, der es ermöglicht, dem Eingang von Informationen einen Zeitpunkt zuzuordnen.

Die Fig. 2 zeigt eine erste erfindungsgemäße Mobileinheit 20, die im Wesentlichen vier Komponenten umfasst: Eine Mobileinheit-Kommunikationseinheit 22 kommuniziert über die Funkverbindung 3 mit der Zentraleinheit 10; eine E/A-Einheit (Eingabe-AusgabeEinheit) 23 empfängt Eingaben von einem Benutzer der Mobileinheit 20 und zeigt diesem entsprechende Ausgaben an; eine Recheneinheit 26 empfängt die Eingabe von der E/A-Einheit 23 und zeigt mittels dieser entsprechende Ausgaben an; eine GPS-Sende-Empfangseinheit 24 kommuniziert mit einem GPS-System, um Geokoordinaten 7 der Mobileinheit 20 anzugeben; die Mobileinheit-Kommunikationseinheit 22, die E/A-Einheit 23 und die GPS-Sende-Einheit 24 stehen in kommunikativer Verbindung mit der Recheneinheit 26. Die Recheneinheit 26 dient dazu, die vorab genannten Einheiten zu steuern und über diese entsprechende Informationen einzulesen und auszugeben.

Die erfindungsgemäße Mobileinheit 20 wird von einem Benutzer verwendet. Beispielsweise kann dieser mit der Mobileinheit 20 einen Bäcker seiner Wahl aufsuchen. Stellt der Benutzer der Mobileinheit 20 nach dem Kauf von Backwaren fest, dass der Bäcker qualitativ hochwertige Waren verkauft, so kann er dieses über die Mobileinheit 20 an die Zentraleinheit 10 kommunizieren. Hierfür kann beispielsweise eine entsprechende Anwendung auf der Mobileinheit 20 installiert sein, die ein Textfeld zur Eingabe von Nutzinformationen 9 mittels der E/A-Einheit 23 ausgibt. In dieses Textfeld kann der Benutzer die Worte "Bäcker", "gut" als Nutzinformation 9 eingeben und seine Bewertung per Knopfdruck absenden. Die Recheneinheit 26 erfasst diese Eingabe und bestimmt mittels der GPS-Sende-Empfangseinheit 24 die Geokoordinaten 7, an denen sich der Benutzer der Mobileinheit 20 momentan befindet (z.B. in oder vor dem Geschäft des Bäckers). Sowohl die Nutzinformation 9 wie auch die Geokoordinaten 7 werden über die Mobileinheit-Kommunikationseinheit 22 und die Serverkommunikationseinheit 12 an den Server 11 übermittelt. Der Server 11 verarbeitet diese Bewertungsinformation, umfassend die Nutzinformation 9 und die Geokoordinaten 7, und speichert entsprechende Daten in der Datenbank 13 ab.

Eine beispielhafte Struktur einer Tabelle innerhalb der Datenbank 13 lässt sich der Fig. 4 entnehmen. So enthält die Datenbank 13 eine Vielzahl von Datensätzen 4, die jeweils mit einer abgegebenen Bewertungsinformation korrespondieren. Ein Datensatz 4 enthält beispielsweise eine oder mehrere Geokoordinaten 7, und eine Nutzinformation 9. Optional kann zusätzlich ein Zeitstempel 5, der von dem Zeitserver 14 generiert wurde, und eine Identifikationsnummer 8 in dem Datensatz 4 gespeichert werden. Zusätzlich zu der Geokoordinate 7 oder stattdessen kann eine 2-D-Matrix 6 oder ein Geocode im Datensatz 4 gespeichert werden.

Geht man nun davon aus, dass eine Vielzahl von Benutzern mit einer Vielzahl von Mobileinheiten 20 den oben genannten Bäcker aufsuchen und feststellen, dass dieser hervorragende Backwaren anbietet, so wird die Zentraleinheit 10 eine Vielzahl von ähnlich gearteten Eingaben empfangen und entsprechende Bewertungsinformationen in der Datenbank 13 speichern. Es ergeben sich also zahlreiche Datensätze, die im Wesentlichen ähnliche oder identische Geokoordinaten 7 aufweisen. Die erfassten und gespeicherten Geokoordinaten 7 ermöglichen es nicht nur, den Bäcker anhand seiner geografischen Position aufzufinden, sondern bestätigen auch die Nutzinformationen 9, die in den entsprechenden Datensätzen 4 gespeichert sind. Des Weiteren können die Geokoordinaten verwenden werden, um Informationen zu klustern oder zu gruppieren. Zur weiteren Authentifizierung der gewonnenen Nutzinformationen 9 kann die Mobileinheit 20 eine Identifikationsnummer 8 an den Server 11 liefern. Diese Identifikationsnummer 8 kann entweder zur Identifikation der verwendeten Mobileinheit 20 oder des Benutzers dieser dienen. Beispielsweise kann die oben angeführte Anwendung den Benutzer auffordern, dessen Identifikationsnummer 8 einzugeben. Der Server 11 kann derart ausgebildet sein, dass er nur Eingaben von registrierten Benutzern mit gültigen Identifikationsnummern 8 annimmt.

Eine alternative Mobileinheit 20' (vgl. Fig. 3) kann an Stelle der GPS-Sende-Empfangseinheit 24 eine Digitalkamera 25 umfassen. Es ist möglich, mittels der Digitalkamera 25 ähnliche Präsenzinformationen zu gewinnen, wie dies mittels der GPS-Sende-Empfangseinheit 24 möglich ist. Hierfür müssen sich die einzelnen Geschäfte bei der Zentraleinheit 10 registrieren. Diese erstellt für jedes registrierte Geschäft eine Kennzeichnung, beispielsweise in Form eines individuellen 2-D-Barcodes oder einer 2-D-Matrix 6. Dieser Barcode kann entweder eine individuelle Identifikationsnummer des Geschäfts kodieren oder dessen geografische Position oder beides. Zusätzliche Informationen, beispielsweise die Art des Geschäfts, können in dem 2-D-Barcode codiert werden. Vorzugsweise bringt der Inhaber des Geschäfts den 2-D-Barcode an seinem Geschäft an.

Stellt nun ein Benutzer der alternativen Mobileinheit 20' fest, dass ein mit einer entsprechenden Kennzeichnung versehenes Geschäft eine ausgezeichnete Dienstleistung anbietet, so fotografiert er das dort angebrachte Kennzeichen in Form eines 2-D-Matrix 6 und gibt hierzu entsprechende Nutzinformationen 9 ein. Die alternative Mobileinheit 20' überträgt die 2-D-Matrix 6 und die Nutzinformation 9 an die Zentraleinheit 10, die die empfangenen Informationen in der Datenbank 13 speichert. Hierfür kann es notwendig sein, die 2-D-Matrix 6 serverseitig zu decodieren. Alternativ kann eine Decodierung der 2-D-Matrix 6 auch auf der Mobileinheit 20' erfolgen.

Vorab wurde eine erste Mobileinheit 20 (Fig. 2) und eine zweite Mobileinheit 20' (Fig. 3) beschrieben, wobei die eine GPS-Sende-Empfangseinheit 24 und die andere eine Digitalkamera 25 zur Bereitstellung von Präsenzinformationen umfassen. Vorzugsweise hat eine erfindungsgemäße Mobileinheit 20, 20' sowohl eine GPS-Sende-Empfangseinheit 24 und eine Digitalkamera 25 und kann Präsenzinformationen in Form eines Geocodes, insbesondere der 2-D-Matrix 6, und in Form von Geokoordinaten 7 bereitstellen. Es erweist sich als äußerst aufwändig, diese Form der Präsenzinformationen zu fälschen.

Sämtliche der vorab beschriebenen Mobileinheiten 20, 20' sind dazu geeignet, Präsenzinformationen und Nutzinformationen 9 sowie optional Identifikationsinformationen, z.B. eine IMEI-Nummer als Identifikationsnummer 8 und eine Zeitkennung oder einen Zeitstempel 5 zu sammeln und an den Zentralserver 10 weiterzuleiten. Dieser befüllt die Datenbank 13 mit entsprechenden Bewertungsinformationen, die von weiteren Benutzern oder denselben Benutzern abgefragt werden können. Die Qualität der Informationen, insbesondere der Nutzinformationen wird anhand der beschriebenen Authentifizierungsverfahren sichergestellt.

Als zusätzliche Dienstleistung kann es angeboten werden, dass ein Benutzer über das Fotografieren der vorab beschriebenen Kennzeichnung, insbesondere der vorab beschriebenen 2-D-Matrix 6 einen bestimmten Dienst abonniert. So kann sich der Server 11 merken, welche Mobileinheit 20, 20' oder welcher Benutzer eine bestimmte 2-D-Matrix 6 übermittelt hat und diese Mobileinheit 20, 20' in Zukunft mit Informationen bezüglich des zugehörigen Geschäfts versorgen. Diese Informationen können von weiteren Benutzern mit entsprechenden Mobileinheiten 20, 20' oder von dem Inhaber des Geschäfts bereitgestellt werden.

Vorab wurde das erfindungsgemäße Bewertungssystem lediglich in Verbindung mit Geschäften beschrieben. Es ist jedoch offensichtlich, dass sich das Bewertungssystem in Verbindung mit beliebigen Objekten, auch mit Orten (z.B. Sehenswürdigkeiten) verwenden lässt.

### Bezugszeichenliste

- 1: Netzwerk
- 3: Funkverbindung
- 4: Datensatz
- 5: Zeitstempel
- 6: 2-D-Matrix
- 7: Geokoordinate
- 8: Identifikationsnummer
- 9: Nutzinformation
- 10: Zentraleinheit
- 11: Server
- 12: Server-Kommunikationseinheit
- 13: Datenbank
- 14: Zeitserver
- 20, 20': Mobileinheit
- 22: Mobileinheit-Kommunikationseinheit
- 23: E/A-Einheit
- 24: GPS-Sende-Empfangseinheit
- 25: Digitalkamera
- 26: Recheneinheit
- 30: Verbrauchereinheit

## Patentansprüche

1. Bewertungssystem, umfassend:
- eine Zentraleinheit (10);
- eine Vielzahl von Mobileinheiten (20, 20'), die jeweils mindestens einem Individuum zugeordnet sind, mit:
- einer Nutzinformationserfassungseinheit (23) zur Erfassung mindestens einer Nutzinformation (9) des Individuums;
- einer Präsenzinformationserfassungseinheit (24, 25) zur Erfassung mindestens einer Präsenzinformation (6, 7) des Individuums;
- einer Kommunikationseinheit (22) zum Übertragen mindestens einer Bewertungsinformation, umfassend die Präsenzinformation (6, 7) und die Nutzinformation (9), an die Zentraleinheit (10),
wobei die Zentraleinheit (10) eine Verarbeitungseinrichtung zur Erzeugung eines Bewertungsindexes von Objekten, insbesondere Orten und/oder Einrichtungen und/oder Veranstaltungen, in Abhängigkeit von einer Vielzahl von Bewertungsinformationen von der Vielzahl von Mobileinheiten (20, 20') umfasst.

2. Bewertungssystem nach Anspruch 1,
**dadurch gekennzeichnet, dass**
die Kommunikationseinheit (22) eine Einrichtung zur Übertragung von elektronischen Kurznachrichten und/oder eine Funk-Sende-Empfangseinrichtung umfasst.

3. Bewertungssystem nach einem der vorhergehenden Ansprüche,
**dadurch gekennzeichnet, dass**
die Präsenzinformationserfassungseinheit (24, 25) eine Einrichtung zum Erfassen einer geographischen Position, insbesondere eine Empfangseinrichtung für GPS- und/oder Galileo-Signale, umfasst.

4. Bewertungssystem nach einem der vorhergehenden Ansprüche,
**dadurch gekennzeichnet, dass**
die Präsenzinformationserfassungseinheit (24, 25) mindestens einen Bildsensor zum Erfassen einer Kennzeichnung eines Objekts umfasst.

5. Bewertungssystem nach einem der vorhergehenden Ansprüche, insbesondere nach Anspruch 4,
**dadurch gekennzeichnet, dass**
die Kennzeichnung eine optoelektronisch lesbare Schrift, insbesondere einen 1-D-Code und/oder 2-D-Code und/oder 3-D-Code, umfasst.

6. Bewertungssystem nach einem der vorhergehenden Ansprüche,
**dadurch gekennzeichnet, dass**
mindestens eine Mobileinheit (20, 20') und/oder die Zentraleinheit (10) eine Zeiterfassungseinheit (14) umfassen.

7. Bewertungssystem nach einem der vorhergehenden Ansprüche,
**dadurch gekennzeichnet, dass**
mindestens eine Mobileinheit (20, 20') eine Identitätserfassungseinheit zur Erfassung der Identität des Individuums und/oder der Mobileinheit (20, 20') umfasst.

8. Bewertungssystem nach einem der vorhergehenden Ansprüche, insbesondere nach Anspruch 7,
**dadurch gekennzeichnet, dass**
die Identitätserfassungseinheit zur Erfassung einer Identifikationsnummer (8), insbesondere einer IMSI-Nummer und/oder IMEI-Nummer der Mobileinheiten (20, 20'), ausgebildet ist.

9. Verfahren zur Bewertung einer Vielzahl von Objekten, insbesondere mittels eines Bewertungssystems nach einem der vorhergehenden Ansprüche, umfassend die Schritte:
a) Erfassen einer Vielzahl von Bewertungsinformationen mit jeweils mindestens einer Präsenszinformation (6, 7), der mindestens eine geographische Position zugeordnet werden kann;
b) Speichern der Bewertungsinformationen in einer Datenbank (13);
c) Zusammenfassen der Bewertungsinformationen in Bewertungsklustern, wobei die Bewertungsinformationen mit ähnlichen oder identischen geographischen Positionen in einem Bewertungskluster zusammengefasst werden;
d) Zuordnen mindestens eines Objekts zu einem Bewertungskluster;
e) Bewerten des mindestens einen Objekts in Abhängigkeit von den Bewertungsinformationen in dem zugeordneten Bewertungskluster.

10. Verfahren nach Anspruch 9,
**dadurch gekennzeichnet, dass**
im Schritt e) die Objekte besser bewertet werden, denen ein Bewertungskluster mit einer größeren Anzahl von Bewertungsinformationen zugeordnet ist.

11. Verfahren nach einem der Ansprüche 9 oder 10,
**dadurch gekennzeichnet, dass**
mindestens eine Bewertungsinformation Daten bezüglich einer Kennzeichnung eines Objekts und/oder Daten bezüglich einer von einer Mobileeinheit (20, 20') erfassten Geokoordinate umfasst.

12. Verfahren nach einem der Ansprüche 9 bis 11, insbesondere nach Anspruch 11,
**dadurch gekennzeichnet, dass**
die Kennzeichnung des Objekts eine optoelektronisch lesbare Schrift, insbesondere einen 1-D-Code und/oder 2-D-Code und/oder 3-D-Code, umfasst.

13. Verfahren nach einem der Ansprüche 9 bis 12,
**dadurch gekennzeichnet, dass**
die Bewertungsinformation Nutzinformationen umfasst, wobei das Bewerten und/oder Zuordnen des Objekts in Abhängigkeit von den Nutzinformationen geschieht.

14. Verfahren nach einem der Ansprüche 9 bis 13, insbesondere nach Anspruch 13,
**dadurch gekennzeichnet, dass**
die Nutzinformationen Schlagworte bezüglich der Güte eines Objekts umfassen und in Schritt e) Schlagwortkluster zur Bewertung der Objekte gebildet werden.

15. Verfahren nach einem der Ansprüche 9 bis 13,
**gekennzeichnet durch**
den Schritt des Authentifizierens der Bewertungsinformation anhand einer Identifikationsinformation, insbesondere einer Identifikationsinformation, die sich auf ein zur Erfassung der Präsenzinformation verwendetes Gerät bezieht, und/oder anhand eines Zeitstempels.

## Geänderte Patentansprüche

### Geänderte Patentansprüche gemäss Regel 137(2) EPÜ.

**1.** Bewertungssystem, umfassend:
- eine Zentraleinheit (10);
- eine Vielzahl von Mobileinheiten (20, 20'), die jeweils mindestens einem Individuum zugeordnet sind, mit:
- einer Nutzinformationserfassungseinheit (23) zur Erfassung mindestens einer Nutzinformation (9) des Individuums;
- einer Präsenzinformationserfassungseinheit (24, 25) zur Erfassung mindestens einer Präsenzinformation (6, 7) des Individuums;
- einer Kommunikationseinheit (22) zum Übertragen mindestens einer Bewertungsinformation, umfassend die Präsenzinformation (6, 7) und die Nutzinformation (9), an die Zentraleinheit (10),
**dadurch gekennzeichnet, dass**
die Zentraleinheit (10) eine Verarbeitungseinrichtung zur Erzeugung eines Bewertungsindexes von Objekten in Abhängigkeit von einer Vielzahl von Bewertungsinformationen von der Vielzahl von Mobileinheiten (20, 20') umfasst, wobei die Zentraleinheit einer Zusammenfassung der Bewertungsinformationen mit ähnlicher oder identischen Präsenzinformationen in einem Bewertungskluster ausgebildet ist und die Objekte besser bewertet werden, denen ein Bewertungskluster mit einer größeren Anzahl von Bewertungsinformationen zugeordnet ist.

**2.** Bewertungssystem nach Anspruch 1,
**dadurch gekennzeichnet, dass**
die Kommunikationseinheit (22) eine Einrichtung zur Übertragung von elektronischen Kurznachrichten und/oder eine Funk-Sende-Empfangseinrichtung umfasst.

**3.** Bewertungssystem nach einem der vorhergehenden Ansprüche,
**dadurch gekennzeichnet, dass**
die Präsenzinformationserfassungseinheit (24, 25) eine Einrichtung zum Erfassen einer geographischen Position umfasst.

**4.** Bewertungssystem nach einem der vorhergehenden Ansprüche,
**dadurch gekennzeichnet, dass**
die Präsenzinformationserfassungseinheit (24, 25) mindestens einen Bildsensor zum Erfassen einer Kennzeichnung eines Objekts umfasst.

**5.** Bewertungssystem nach Anspruch 4,
**dadurch gekennzeichnet, dass**
die Kennzeichnung eine optoelektronisch lesbare Schrift umfasst.

**6.** Bewertungssystem nach einem der vorhergehenden Ansprüche,
**dadurch gekennzeichnet, dass**
mindestens eine Mobileinheit (20, 20') und/oder die Zentraleinheit (10) eine Zeiterfassungseinheit (14) umfassen.

**7.** Bewertungssystem nach einem der vorhergehenden Ansprüche,
**dadurch gekennzeichnet, dass**
mindestens eine Mobileinheit (20, 20') eine Identitätserfassungseinheit zur Erfassung der Identität des Individuums und/oder der Mobileinheit (20, 20') umfasst.

**8.** Bewertungssystem nach Anspruch 7,
**dadurch gekennzeichnet, dass**
die Identitätserfassungseinheit zur Erfassung einer Identifikationsnummer (8), nämlich einer IMSI-Nummer und/oder IMEI-Nummer der Mobileinheiten (20, 20'), ausgebildet ist.

**9.** Verfahren zur Bewertung einer Vielzahl von Objekten umfassend die Schritte:
a) Erfassen einer Vielzahl von Bewertungsinformationen mit jeweils mindestens einer Präsenszinformation (6, 7), der mindestens eine geographische Position zugeordnet werden kann;
b) Speichern der Bewertungsinformationen in einer Datenbank (13);
c) Zusammenfassen der Bewertungsinformationen in Bewertungsklustern, wobei die Bewertungsinformationen mit ähnlichen oder identischen geographischen Positionen in einem Bewertungskluster zusammengefasst werden;
d) Zuordnen mindestens eines Objekts zu einem Bewertungskluster;
e) Bewerten des mindestens einen Objekts in Abhängigkeit von den Bewertungsinformationen in dem zugeordneten Bewertungskluster,
wobei die Objekte besser bewertet werden, denen ein Bewertungskluster mit einer größeren Anzahl von Bewertungsinformationen zugeordnet ist.

**10.** verfahren nach Anspruch 9,
**dadurch gekennzeichnet, dass**
mindestens eine Bewertungsinformation Daten bezüglich einer Kennzeichnung eines Objekts und/oder Daten bezüglich einer von einer Mobileeinheit (20, 20') erfassten Geokoordinate umfasst.

**11.** Verfahren nach Anspruch 10,
**dadurch gekennzeichnet, dass**
die Kennzeichnung des Objekts eine optoelektronisch lesbare Schrift, insbesondere einen 1-D-Code und/oder 2-D-Code und/oder 3-D-Code, umfasst.

**12.** Verfahren nach einem der Ansprüche 9 bis 11,
**dadurch gekennzeichnet, dass**
die Bewertungsinformation Nutzinformationen umfasst, wobei das Bewerten und/oder Zuordnen des Objekts in Abhängigkeit von den Nutzinformationen geschieht.

**13.** Verfahren nach Anspruch 12,
**dadurch gekennzeichnet, dass**
die Nutzinformationen Schlagworte bezüglich der Güte eines Objekts umfassen und in Schritt e) Schlagwortkluster zur Bewertung der Objekte gebildet werden.

**14.** Verfahren nach einem der Ansprüche 9 bis 12,
**gekennzeichnet durch**
den Schritt des Authentifizierens der Bewertungsinformation anhand einer Identifikationsinformation, insbesondere einer Identifikationsinformation, die sich auf ein zur Erfassung der Präsenzinformation verwendetes Gerät bezieht, und/oder anhand eines Zeitstempels.
